# EUROPÄISCHE PATENTSCHRIFT

(11) **EP 3 855 031 B1**
(45) Veröffentlichungstag und Bekanntmachung des Hinweises auf die Patenterteilung: **28.02.2024**
(21) Anmeldenummer: 21153264.3
(22) Anmeldetag: 25.01.2021
(51) Int. Cl.: F16B 47/00, F16M 13/02, B66C 1/02

(54) **SAUGVORRICHTUNG ZUR REVERSIBLEN HAFTUNG AN EINER SUBSTRATOBERFLÄCHE**
SUCTION DEVICE FOR REVERSIBLE ADHESION TO A SUBSTRATE SURFACE
DISPOSITIF D'ASPIRATION DESTINÉ À L'ADHÉSION RÉVERSIBLE À UNE SURFACE DE SUBSTRAT

(30) Priorität: 27.01.2020 DE 102020101870; 27.01.2020 DE 202020100421 U; 21.01.2021 DE 202021100297 U
(43) Veröffentlichungstag der Anmeldung: 28.07.2021
(73) Patentinhaber: ClingTechBionics UG (haftungsbeschränkt), 53757 Sankt Augustin (DE)
(72) Erfinder: Ditsche, Petra, 53773 Hennef (DE)
(74) Vertreter: Rumrich, Gabriele

(56) Entgegenhaltungen:
- DE-B1- 2 124 511
- US-A- 6 143 391
- US-A1- 2016 258 471

## Beschreibung

Die Erfindung betrifft eine Saugvorrichtung, insbesondere einen Saugnapf, Saugheber oder Vakuumgreifer, zur reversiblen Haftung an einer Substratoberfläche.

Saugnäpfe stellen auf nicht porösem Untergrund eine gute Möglichkeit dar um Objekte reversibel und ohne Beschädigung der Oberfläche zu befestigen. Sie besetzten somit eine andere Marktnische als mechanische Befestigungen, wie Schrauben, Nägel, Klammern oder Klebstoffe, welche eher für eine permanente Befestigung ausgelegt sind und meist die Objekte und/oder Oberflächen dauerhaft verändern (Klebstoffreste, Löcher, Kerben, Druckstellen etc.). Unter Wasser wird die Situation zusätzlich erschwert, da Unterwasserklebstoffe noch in der Entwicklung und schwer aufzubringen sind. Auch der Biofilmbewuchs erschwert eine Befestigung, da er zu einer zusätzlichen Struktur sowie oftmals auch glitschigen Oberflächen beiträgt.

Systeme zur temporären Befestigung, wie Klebeband und Saugnäpfe, ermöglichen dagegen eine reversible Befestigung ohne Beschädigung der Substratoberfläche. Jedoch halten Klebebänder im Vergleich zu Saugnäpfen nur Objekte mit sehr geringem Gewicht. Im Gegensatz dazu, können geeignete, qualitativ hochwertige Saugnäpfe auch Gegenstände mit größerem Gewicht (mehrere kg) halten. Herkömmliche technische Saugnäpfe benötigen jedoch in der Regel einen glatten (oder mit nur geringfügigen Oberflächenabweichungen) und ebenen (oder minimal gekrümmten) Untergrund, um zuverlässig zu funktionieren.

In der Druckschrift US 6143391 A wird ein einteiliger Saugnapf aus zwei Materialien beschrieben, welcher eine Innenfläche und einen dauerhaft mit der Innenfläche verbundenen äußeren Teil umfasst. Der innere und der äußere Teil sind aus unterschiedlichen elastischen Materialien geformt, wobei die Eigenschaften des Innenmaterials so gewählt sind, dass sie im Vergleich zum Außenmaterial Konformität, Nachgiebigkeit und Weichheit aufweisen. Eine Anhaftung an leicht strukturierte Oberflächen, wie gestrichenen Wänden, kann gegebenenfalls erreicht werden.

Die Druckschrift WO 1997019272 A1 (siehe auch DE 696 10 216 T2 aus der Patentfamilie) offenbart eine lösbare Befestigungsvorrichtung, die eine folienförmige elastische Schicht oder Dichtung bzw. eine klebrige Haftmasse und einen Saugnapf umfasst, der mit der elastischen Schicht zusammenwirkt. Um die Widerstandsfähigkeit gegen Bewegung in Richtung parallel zur Oberfläche zu unterstützen, sind bei abgeflachtem Saugnapf, d.h. bei Aufbringung auf eine ebene Fläche, erhöhte Ringe in die elastische Dichtung eingebettet, welche direkt am Saugnapf ausgebildet sind. Eine individuelle Anpassung an große Oberflächenrauheiten ist nicht möglich. Die elastische Schicht weist eine Rückprallhärte kleiner/gleich 30 Shore A bis zu kleiner/gleich 10 Shore auf. Die elastische Schicht besteht weiterhin aus einem klebrigen Material, welches nach Entfernung einen Ölrückstand hinterlässt. Wenn der Saugnapf an einer flachen Oberfläche angebracht wird, leisten erhabene Ringe im elastischen Haftmaterial Widerstand gegen dessen Bewegungen radial nach innen und außen. Dieser Saugnapf ermöglicht die Anhaftung an leicht raue, zumindest nicht glatte Oberflächen. Eine individuelle Anpassung an gröbere Oberflächenrauheit, Welligkeit und/oder Formabweichung des Untergrundes, welche den Gestaltabweichungen 1.-3. Ordnung nach DIN 2760 entsprechen, ist mit diesem Saugnapf somit nicht möglich.

In der Druckschrift WO 2013055111 A1 wird ein Vakuumextraktor beschrieben mit einer Stützkappe, die mit einem harten Kunstharz geformt ist; einer Saugscheibe mit einer Überzugsschicht, die mit einem Elastomer auf der oberen Oberfläche und der seitlichen Umfangsseite einer Platte zur Adsorption spritzgegossen ist, und einer Adsorptionsschicht, die mit einem Elastomer mit einer geringeren Härte als die der Überzugsschicht auf der seitlichen Umfangsseite überlappend spritzgegossen ist, und einem Teil der Überzugsschicht, der die untere Oberfläche der Platte zur Adsorption enthält, wobei die Saugscheibe elastisch verformt wird, so dass sie eng an der zu saugenden Oberfläche haftet.

In der Druckschrift US 9 499 214 B2 wird eine gattungsgemäße Saugvorrichtung beschrieben, bei der in Richtung zu einer Substratoberfläche ein ringförmiges Band aus weichem, elastischem, klebrigem, festem und nicht fließfähigem Material angeordnet ist, dass sich in einer ringförmigen Aussparung befindet, wobei das ringförmige Band eine Klebrigkeit aufweist, die eine 90 ° -Schälfestigkeit von etwa 0,1 Ib./in (0,01 N/m) bis etwa 40 Ibs./in (4,52 N/m) aufweist. Das Band weist eine Härte zwischen 35 Shore 000 und 50 Shore A auf. Da die Klebrigkeit des weichen Bandes für die Funktion dieses Saugnapfes insbesondere bei Vorhandensein von Oberflächenunregelmäßigkeiten entscheidend ist, funktioniert dieser Saugnapf nicht auf feuchten oder untergetauchten Flächen.

Aus der Druckschrift DE 10 2006 020 032 A1 ist eine Einrichtung zur Vergrößerung der Haftfähigkeit bei Saugnäpfen und Unterdruck-Haltevorrichtungen bekannt, bei welcher die abdichtende Randzone/-fläche durch eine angelagerte, angeklebte, angeformte, angespritzte oder angegossene Zone eines extrem weichen Materials bis hinunter zu 5 Shore A und weniger zu einer Trägerfläche abgedichtet wird. Das Dichtelement ist dabei in der Art eines Rundschnurrings ausgebildet, liegt an einem Absatz der Saugplatte an und steht radial über die Saugplatte hinaus, so dass auf den überstehenden Bereich des Dichtelements eine Druckkappe einwirken kann. Durch die Druckkappe führt ein mit der Saugplatte ausgebildeter Schaft, mit dem ein Hebel wirkverbunden ist. Beim Umklappen des Hebels wird die Saugplatte in ihrer Mitte angehoben und die Druckkappe drückt umfangsseitig auf das Dichtelement. Es bildet sich zwischen einer Substratoberfläche und der Saugfläche ein Unterdruck aus, wodurch der Saugnapf an der Substratoberfläche haftet. Dadurch, dass das Dichtelement zwischen dem Anschlag der Saugplatte und dem darauf von oben wirkenden Rand der Druckplatte eingespannt ist, wird der Bereich, in dem das Dichtungselement gegen die Substratoberfläche wirkt, auf einen relativ geringen Umfangsbereich eingeschränkt, und das Dichtelement kann sich radial nach innen und außen nicht frei verformen. Weiterhin ermöglicht die starre Druckplatte eine Anpressung des weichen Dichtungselementes nur auf einem ebenen Untergrund mit aufgelagerter Rauheit (ohne Welligkeit oder Formabweichung), eine Anpassung an Oberflächen mit mehreren Rauheitsordnungen, wie beispielsweise wellige Oberflächen mit zusätzlichen feinere Oberflächenrauheiten, ist nicht möglich. In der Druckschrift WO2019156567 A1 wird noch eine Saugvorrichtung des Standes der Technik beschrieben.

Die vorgestellten Lösungen ermöglichen eine verbesserte Abdichtung auf leicht strukturierten Substraten. Eine Haftung an unebenen oder stark strukturierten Oberflächen, wie z.B. Tränenblech (auch Riffelblech genannt) oder Oberflächen mit Gestaltabweichungen über mehreren Ordnungen entsprechend DIN 2760 (Formabweichungen, Welligkeit, verschiedenen Rauheitsordnungen) kann jedoch mit diesen Saugnäpfen nicht gewährleistet werden. Weiterhin wurden diese Lösungen in der Regel für die Anhaftung an trockene Oberflächen entwickelt. Inspiration zur Anhaftung an nicht nur geringfügig, sondern stark raue und/oder wellige oder gewölbte Oberflächen kommt hier von der Natur, von einem kleinen Fisch, dem Northern Clingfish, der sich hervorragend an die teilweise extrem rauen Steine im Gehzeitenbereich mit Hilfe seines Saugnapfes ansaugen kann.

Auf den Erkenntnissen aufbauend beschreibt Druckschrift US 8783634 A1 einen Saugnapf mit der Fähigkeit, an rauen Oberflächen zu haften, sowie ein Verfahren zur Befestigung des Saugnapfes an einer Zielfläche. Die Saugvorrichtung umfasst einen Körper mit einem Saugbereich und eine Vielzahl von Mikrohärchen, die von den Rändern des Saugbereichs abhängen und zu einer Erhöhung der Reibung als auch zur Abdichtung auf rauen Oberflächen beitragen. Bei der Umsetzung stellt sich allerdings heraus, dass es problematisch ist, Saugnäpfe mit Mikrohärchen in der notwendigen Dimension und der erforderlichen geringen Härte kosteneffektiv herzustellen.

Aufgabe der hier präsentierten Erfindung ist es, eine Saugvorrichtung, insbesondere einen Saugnapf, Saugheber oder Vakuumgreifer, zur Verfügung zu stellen, welche eine zuverlässige Haftung auch an Substratoberflächen mit großer Rauigkeit, gewölbten Substratoberflächen auf trockenen, feuchten oder unter Wasser befindlichen Substratoberflächen ermöglicht. Bei der Saugvorrichtung handelt es sich insbesondere um einen Saugnapf oder Vakuumgreifer. In besonderen Fällen kann sich der Saugnapf dabei auch innerhalb eines Saughebers befinden. (Letzterer Fall ist im Folgenden soweit nicht explizit anders erwähnt unter Saugnapf gefasst.)

Diese Aufgabe wird mit den Merkmalen des ersten und zweiten Patentanspruchs gelöst. Vorteilhafte Ausgestaltungen ergeben sich aus den Unteransprüchen.

Die Saugvorrichtung, insbesondere der Saugnapf, Saugheber oder Vakuumgreifer, zur reversiblen Haftung an einer Substratoberfläche weist erfindungsgemäß einen ersten Bereich auf, der der Betätigung der Saugvorrichtung dient, und einen zweiten Bereich, der über eine Saugnapfoberfläche (dieser Begriff wird für den Saugnapf, den Saugheber und den Vakuumgreifer verwendet) mit der Substratoberfläche in Kontakt bringbar ist, wobei der erste Bereich aus wenigstens einem härteren elastischen ersten Material und der zweite Bereich aus einem in Bezug auf das erste Material weicheren zweiten Material besteht, wobei das zweite Material ein ultraweiches Material mit einer Härte von Shore 00 kleiner oder gleich 50 ist, so dass sich der zweite Bereich an raue, unebene und/oder gekrümmte Substratoberflächen umso besser ansaugt, je weicher und dicker das zweite Material ist, wobei die Dicke des zweiten Bereichs in einem unbelasteten Zustand mindestens 2,5 % eines Außendurchmessers oder einer Länge oder Breite des ersten Bereiches beträgt und der zweite Bereich in seiner radialen Bewegungsfreiheit weder durch innere noch durch äußere Anschläge des ersten Bereichs eingeschränkt ist.

In einer weiteren alternativen Ausgestaltung der Erfindung weist die Saugvorrichtung, insbesondere der Saugnapf, Saugheber oder Vakuumgreifer, zur reversiblen Haftung an einer Substratoberfläche erfindungsgemäß einen ersten Bereich auf, der der Betätigung der Saugvorrichtung dient, und einen zweiten Bereich, der über eine Saugnapfoberfläche mit der Substratoberfläche in Kontakt bringbar ist, wobei der erste Bereich aus wenigstens einem härteren elastischen ersten Material und der zweite Bereich aus einem in Bezug auf das erste Material weicheren zweiten Material besteht, wobei das zweite Material ein ultraweiches Material mit einer Härte von Shore 00 kleiner oder gleich 50 ist so dass in das eine in Bezug auf das erste Material weichere zweite Material Partikel und/oder Fasern und/oder Säulen oder säulenartigen Strukturen integriert sind, die härter sind als das zweite Material und die bei einer auf die Saugnapfoberfläche in Richtung zur Substratoberfläche wirkenden Kraft in Richtung zur Substratoberfläche gedrückt werden und sich an eine gekrümmte Kontur der Substratoberfläche anpressen und/oder in Ausnehmungen eines Rauheitsprofils der Substratoberfläche zumindest teilweise pressbar sind.

Insbesondere ist der zweite Bereich über mindestens 65% und besonders bevorzugt über mindestens 75% der gesamten Saugnapffläche des ersten Bereiches ausgebildet.

Die Härte des Materials des zweiten Bereiches kann auch eine Härte von Shore 00 10 oder darunter aufweisen.

Weiterhin weist das erste Material des ersten Bereiches vorzugsweise eine Schore A Härte von wenigstens 50, bevorzugt größer/gleich 60 auf. Dies gewährleistet die erforderliche elastische Verformbarkeit von einem unbelasteten Zustand in den belasteten Zustand des Saugnapfes und zurück.

Bevorzugt weist weiterhin das Material des zweiten Bereiches eine Dicke von 3 % bis 8 %, insbesondere von 3,5% bis 7%, eines Außendurchmessers oder einer Länge oder Breite des ersten Bereiches auf.

Das ultraweiche Material des zweiten Bereiches übernimmt dabei die Funktion der hierarchischen Strukturen des weichen, extrem anpassungsfähigem Bereiches des Clingfish-Saugnapfes. Der erste Bereich gewährleistet dagegen die beim Clingfish-Saugnapf durch die unterliegenden Knochenstrukturen gewährleistete Stabilität.

Die angegebene Shore Härte ist dabei bevorzugt die Shore Härte bei Zimmertemperatur, insbesondere bei 23°C.

Bevorzugt weist der zweite Bereich eine höhere Dicke als der erste Bereich auf.

Die Dicke des zweiten Bereiches sollte bei der Saugvorrichtung in einem unbelasteten Zustand größer als 2,5 %, bevorzugt 3-8 %, besonders bevorzugt 3,5-7% der größten sich zu der Ebene der Substratoberfläche erstreckenden Abmessung (je nach Gestaltung des Außendurchmessers oder einer Länge oder Breite, je nachdem ob der erste Bereich in der Draufsicht rund oder eckig ausgeführt ist) des ersten Bereiches 3 betragen.

Dabei wird die Dicke des zweiten Bereiches der Größe der Saugvorrichtung (des Saugnapfes, Saughebers oder Vakuumgreifers) angepasst. Je größer der Durchmesser bzw. die Läge/ Breite des ersten Bereiches der Saugvorrichtung ist, umso größer kann auch die Dicke des zweiten Bereiches ausgeführt sein. Insbesondere betrifft dies die Dicke des zweiten Bereiches in dem Bereich, der im belasteten Zustand an der Substratoberfläche haftet.

Bei der Betätigung der Saugvorrichtung (des Saugnapfes, Saughebers bzw. des Vakuumgreifers) wird zwischen dieser und der Substratoberfläche im Vergleich zum Umgebungsdruck ein Unterdruck erzeugt. Dies kann nach Aufsetzen des Saugnapfes auf die Substratoberfläche durch Drücken des zweiten Bereiches in Richtung zur Substratoberfläche erfolgen oder auch bei einem Saugheber durch Anheben des zweiten Bereiches. In beiden Fällen bildet sich in dem Hohlraum zwischen Substratoberfläche und Innenfläche des Saugnapfes ein Unterdruck im Vergleich zur Umgebung aus und der Saugnapf kann in Bezug auf das Substrat mit einer Kraft belastet werden.

Durch die Verwendung eines sehr weichen, hoch elastischen Materials für den zweiten Bereich wird vorteilhafterweise eine bessere Anpassung an Unebenheiten der Substratoberfläche ermöglicht.

Es hat sich als besonders vorteilhaft erwiesen, dass das erste Material eine Härte von Shore A mindestens 50, bevorzugt gleich/ größer 60 aufweist.

Für raue, aber nicht oder nur leicht gewölbte Substrate, darf die Härte des ersten Bereiches auch deutlich höher liegen, beispielsweise bei 80-100 Shore A und ggf. auch darüber.

Wichtig ist im Falle eines Saugnapfes immer, dass der erste Bereich so elastisch ist, dass eine Rückstellung in eine unbelastete ursprüngliche Form möglich ist und angestrebt wird.

Bevorzugt wird die Elastizität des ersten Bereiches so gewählt, dass eine gewisse Nachgiebigkeit und somit die Möglichkeit der Anpassung an gewölbte Substratoberflächen gewährleistet wird. Im Gegensatz zu starren Strukturen, wie Druckkappen und ähnlichem, gewährleistet dies die Anpassungsmöglichkeit an Gestaltabweichungen über mehrere Ordnungen (Formabweichungen, Welligkeit, verschiedenen Rauheitsordnungen) zu erstrecken.

Gleichzeitig ist es notwendig, den ersten Bereich ausreichend stabil auszubilden, um eine optimale Kraftübertragung auf den zweiten Bereich zu gewährleisten. Das erste Material sollte steif genug sein, um eine Kraftübertragung beim Befestigen des Saugnapfes auf der Substratoberfläche zu gewährleisten bzw. eine entgegen des Ablösens von der Substratoberfläche gerichtete Kraft (elastische oder Rückstellkraft, welcher den Saugeffekt/Unterdruck erzeugt) zu übertragen. Für Saugnäpfe, welche auf rauen, jedoch nicht gewölbten Substratoberflächen eingesetzt werden sollen, darf der erste Bereich auch eine deutlich höhere Elastizität und Härte erreichen.

Bei industriellen Anwendungen, z.B. in Form von Vakuumgreifern, kann der erste Bereich auch aus wenig elastischem Material oder sogar Metall oder einem anderen festen bzw. nicht oder nur wenig elastischen Material bestehen und sehr viel dünner im Vergleich zum zweiten Bereich sein.

Je weicher und dicker das zweite Material ist, desto besser lässt sich der zweite Bereich an raue bzw. unebene und/oder gekrümmte Substratoberflächen ansaugen.

Der Saugnapf von Northern Clingfish weist einen ungewöhnlich breiten Randbereich auf, welcher positiv zur Abdichtung auf extrem rauen Oberflächen beiträgt. So hat es sich auch in der technischen Umsetzung für die Anwendung auf rauen bis sehr rauen Untergründen als besonders vorteilhaft erwiesen, wenn der zweite Bereich einen möglichst großen Teil der Saugnapfoberfläche bedeckt. Dies verbessert gegenüber ringförmigen, dichtungsartigen elastischen Materialschichten die Abdichtung, da nicht nur feine sondern auch gröbere Oberflächenstrukturen komplett durch den ultraweichen zweiten Bereich abgedeckt und eingefasst werden können.

Dabei sollte der ultraweiche Bereich nicht in seiner radialen oder horizontalen Bewegungsfreiheit durch innere oder äußere Anschläge oder starre Strukturen an dem Trägerelement in seiner Ausbreitung eingeschränkt werden, da dies die Anpassung an gröbere Oberflächenstrukturen sowie an Rauheiten verschiedener Ordnung beeinträchtigen würde.

Insbesondere weist der zweite Bereich einen größeren Außendurchmesser auf als der erste Bereich. Durch die vergrößerte Fläche wird vorteilhafterweise eine optimale Abdichtung des Kontaktbereiches zwischen der Substratoberfläche und dem zweiten Bereich des Saugnapfs oder Vakuumgreifers gewährleistet, da sich das Material des zweiten Bereiches an die Substratoberfläche anpasst.

Der erste und der zweite Bereich können auch einen gleichen bzw. annähernd gleichen Außendurchmesser aufweisen.

Die Substratoberfläche kann an einem Substrat, z.B. einem beliebigen Gegenstand oder Bauteil oder auch an biologischen Strukturen ausgebildet sein.

Sowohl der erste, als auch der zweite Bereich sind idealerweise vollflächig ausgebildet.

Es ist aber auch möglich, dass der erste Bereich vollflächig ausgebildet ist und der zweite Bereich sich nur über einen breiten Randbereich des ersten Bereiches erstreckt. In dem Bereich zwischen einem solchen durchgehenden Randbereich und in Richtung zur Mitte des Saugnapfes kann der zweite Bereich bereichsweise unterbrochen sein.

Die Unterbrechung des zweiten Bereiches ist insbesondere bei Vakuumgreifern erforderlich.

Ist der zweite Bereich nur über einen breiten Randbereich ausgebildet muss sich die Fläche zumindest über den Bereich erstrecken, in dem eine Haftung an die darunterliegende Substratoberfläche gewährleistet werden soll. Die möglichst breite Ausbildung der Kontaktfläche verbessert die Abdichtung auf stark strukturiertem Untergrund.

Dabei hat sich eine Flächendeckung von mindestens 55%, insbesondere mindestens 65% idealerweise mehr als 75% der Saugnapfoberfläche als geeignet bzw. vorteilhaft bzw. erwiesen.

Es ist weiterhin möglich, dass der zweite Bereich vollflächig ausgebildet ist und der erste Bereich über die Fläche bzw. den Durchmesser bzw. Radius des ersten Bereiches verteilt eine oder mehrere Unterbrechungen aufweist. Auf diese Art kann der erste Bereich beispielsweise sternförmig, gitterförmig oder in einer beliebigen Ausprägung ausgebildet sein, die eine ausreichende Kraftübertragung auf den zweiten Bereich gewährleistet.

In einer bevorzugten Ausführungsform der Erfindung weist der zweite Bereich zumindest bereichsweise eine Dicke von 1 mm bis 5 mm bevorzugt mindestens 1,5 mm besonders bevorzugt mindestens 2,5 mm bis 3 mm auf.

Die optimale absolute Dicke des zweiten Bereiches hängt von der Größe des Saugnapfes ab, sie beträgt in einem unbelasteten Zustand bevorzugt 3 bis 8%, besonders bevorzugt 3,5-7% des Durchmessers oder einer Länge oder Breite des ersten Bereiches der Saugvorrichtung.

Daher kann die Dicke des zweiten Bereiches in einigen Ausführungsformen auch weniger als 1 mm betragen.

Mit zunehmender Dicke des zweiten Bereiches steigt dabei der tolerierte Grad an Oberflächenunregelmäßigkeiten, welche die anzuhaftende Oberfläche aufweisen kann um noch eine sichere und anhaltende Haftung der Saugvorrichtung (insbesondere des Saugnapfes, Saughebers oder Vakuumgreifers) an die Oberfläche zu gewährleisten. So haben Versuche gezeigt, dass Saugnäpfe mit einer geringeren Dicke des zweiten Bereiches (kleiner/gleich 2,5%) nicht auf stark rauen Oberflächen (Rauheit bzw. Oberflächenstrukturierung ab bzw. größer als 1mm) haften können.

Auch die Fähigkeit an gewölbten Oberflächen zu haften erhöht sich mit der Dicke des zweiten Bereiches und ggf. mit dem Durchmesser des Saugnapfes und der Elastizität des ersten Bereichs.

Bevorzugt besteht das wenigstens eine Material des zweiten Bereiches aus wenigstens einem Polymer und/oder wenigstens einem Elastomer oder einer Kombination aus jeweils einem oder mehreren Polymeren und/oder Elastomeren. Dabei kommen beispielsweise thermoplastische Elastomere, Kautschuk, Naturkautschuk oder Silikon infrage. Bevorzugt werden Silikon und/oder Elastomere verwendet. Beispielsweise bei einer Variante wurde der zweite Bereich aus Platinum-katalysierten Silikonen hergestellt.

Für die Funktionsfähigkeit des zweiten Bereiches ist es unwesentlich, ob er klebrig ist oder nicht. Bevorzugt weist das Material der zweiten Schicht - des zweiten Bereiches keine oder nur eine geringe Klebrigkeit (90° Schälfestigkeit weniger als 45,4 g/in) auf.

Das erste Material besteht insbesondere aus einem elastischen Kunststoff, z.B. beispielsweise thermoplastische Elastomere, Kautschuk, Naturkautschuk oder Silikon.

Es besteht die Möglichkeit, dass sich das verwendete Material bzw. die Materialkombination auch über die Fläche des Saugnapfes, bevorzugt von außen nach innen ändert.

Die extreme Weichheit des zweiten Bereiches insbesondere in Kombination mit der hohen Schichtdicke desselben kann neben der gewünschten verbesserten Abdichtung auf sehr rauen Oberflächen jedoch auch dazu führen, dass der Saugnapf im Kontaktbereich zum Untergrund leichter nachgibt. Dies würde die Haltekraft der Saugvorrichtung sowohl in vertikaler als auch in horizontaler Richtung deutlich verringern. Um dem entgegen zu wirken wurden Ausführungen zur Erhöhung der Reibungseigenschaften entwickelt. Inspiration erfolgte auch hier durch Northern Clingfish, dessen hierarchischen Strukturen des äußerst anpassungsfähigen Saugnapfrandes die Reibungseigenschaften verbessern. Die Erhöhung der Reibungseigenschaften wurde in dieser Erfindung jedoch anders umgesetzt.

Alternativ oder zusätzlich können innerhalb des zweiten Bereiches auch Säulen bzw. säulenartige Strukturen mit rundem oder mehreckigem Querschnitt eingebettet sein, die aus einem elastischen Material bestehen, welches jedoch härter ist als das Material des zweiten Bereiches.

Die Säulen bzw. säulenartigen Strukturen weisen insbesondere einen sechseckigem Querschnitt auf, sind bevorzugt wabenartig angeordnet, und bestehen aus einem etwas härterem Material (kleiner oder gleich Shore A 70, insbesondere Shore A 5 bis 30), Diese sind vorzugsweise in das ultraweiche Material des zweiten Bereiches eingebettet. Diese Struktur erhöht die Stabilität und die Reibungseigenschaften des zweiten Bereiches und gewährleisten gleichzeitig, ähnlich wie die wabenartig angeordneten Papillen auf dem Clingfish Saugnapf, eine extrem gute Anpassung an grobe Oberflächenunebenheiten (Gestaltabweichungen der unteren Ordnungen). Das ultraweiche, die Säulen umgebende Material ermöglich eine gewisse Bewegungsfähigkeit der Säulen zum Untergrund hin bei gleichzeitiger Sicherstellung der Abdichtung zu den Seiten und zum Untergrund und verhindert darüber hinaus unerwünschtes Verkleben der Säulen untereinander.

Das ultraweiche Material, welches die sechseckigen Säulen überdeckt, kann dabei zusätzlich härtere Partikel oder Fasern enthalten, um die Reibungseigenschaften des zweiten Bereiches weiter zu verbessern.

Vorteilhafterweise verbessern derartige Partikel und/oder Fasern und/oder Säulen bzw. säulenartige Strukturen die Reibungseigenschaften des Saugnapfes in Bezug zu der Substratoberfläche. Es kommt unter anderem zu einem Entgegenwirken des Einwärtsgleitens des Saugnapfrandes beim Ziehen der Saugvorrichtung (insbesondere des Saugnapfes bzw. Vakuumgreifers) in eine Richtung vertikal von der Substratoberfläche, an welcher der Saugnapf haftet. Dies führt schließlich zu höheren Haltekräften der Saugvorrichtung (insbesondere des Saugnapfes, Saughebers bzw. Vakuumgreifers). Die erhöhten Reibungseigenschaften erhöhen nicht nur die Haltekraft in Richtung senkrecht zur Substratoberfläche, sondern auch die Scherkräfte, die parallel zur Substratoberfläche wirkenden Kräften standhalten. In letzterem Fall wird der ganze Saugnapf/die Saugvorrichtung (bzw. die an der Substratoberfläche anhaftenden Bereiche) parallel zur Substratoberfläche gezogen.

Es hat sich als besonders vorteilhaft erwiesen, dass die Partikel und/oder Fasern und/oder Säulen bzw. säulenartigen Strukturen derart in das wenigstens eine zweite Material integriert sind, dass die Saugnapfoberfläche und die Partikel bei einer auf die Saugnapfoberfläche in Richtung zur Substratoberfläche wirkenden Kraft in Richtung zur Substratoberfläche gedrückt werden und sich an eine gekrümmte Kontur der Substratoberfläche anpressen und/oder in Ausnehmungen eines Rauheitsprofils der Substratoberfläche zumindest teilweise eingepresst werden.

Bevorzugt ist die Saugnapfoberfläche des zweiten Bereiches, welche mit einer Substratoberfläche in Kontakt kommt, bei Nichtbelastung nahezu vollständig glatt, weist also nahezu keine Erhebungen auf. Die Saugnapfoberfläche des zweiten Bereiches ist idealerweise so glatt wie ungefähr Glas mit einer glatten Oberfläche ausgebildet (bevorzugt < 1 µm Rauheit). Vorteilhafterweise bleibt dadurch bei erhöhter Reibung die Abdichtung des Saugnapfes auf glatten bis rauen Substratoberflächen erhalten. Da das Material des zweiten Bereiches aber extrem weich ist, sind auch gewisse Rauheiten der Saugnapfoberfläche des zweiten Bereiches tolerierbar.

Wenn eine in Richtung zur Substratoberfläche wirkende Druckbelastung bei angesaugter Saugvorrichtung erfolgt, werden die Partikel und/oder Fasern innerhalb des zweiten Bereiches in Richtung zur Substratoberfläche gedrückt. Auf diese Art können sie sich an eine gekrümmte Kontur und/oder an ein Rauheitsprofil der Substratoberfläche anpassen. Die Reibungserhöhung wirkt somit nur unter Druck. Der Druck wird am Rand des Saugnapfes durch die Rückstellkraft des ersten Bereiches des Saugnapfes aufgebaut bzw. erzeugt. Der Bereich des Saugnapfrandes, der mit der Substratoberfläche in Kontakt steht, kann jedoch sehr breit sein.

Weiterhin können in der ersten Schicht beziehungsweise dem ersten Bereich Erhöhungen und/oder eine Struktur ausgebildet sein, die in die zweite Schicht beziehungsweise den zweiten Bereich hinein ragen/ragt und bei Druckausübung in die zweite Schicht pressbar sind. Diese Erhöhungen sind beispielsweise in der Form von regelmäßig oder unregelmäßig verteilten punktförmigen Erhöhungen ausgebildet oder sie erstrecken sich strahlenförmig von der Mitte / dem Zentrum des Saugnapfes radial nach außen. Größe und Struktur der Erhöhungen können auf die Oberflächenstruktur des Substrates abgestimmt werden, um die Reibungserhöhung zu optimieren.

Die dann in der ersten Schicht vorhandenen Erhöhungen / bzw. die Struktur ragt somit in die zweite Schicht hinein und übt dann im Wesentlichen die gleiche Funktion aus wie die Partikel in der zweiten Schicht, die also bei Druckausübung gegen die Substratoberfläche, insbesondere in die Täler der Oberflächenstruktur eingedrückt werden und so die Reibung erhöhen.

Wichtig ist, dass bei einer Saugvorrichtung in Form eines Saugnapfes der obere Teil des Saugnapfes, also der erste Bereich, eine hohe Rückstellkraft aufweist, damit er einen starken Druck entwickelt.

Ist der Saugnapf Bestandteil eines Saughebers so kann der Unterdruck alternativ auch durch mechanisches Anheben des ersten Bereiches erzeugt werden. Einige Saugheber sind dabei mit einer Vakuumpumpe ausgestattet, die manuell betätigt wird und durch welche der Unterdruck erzeugt wird.

Der zweite Bereich der Saugvorrichtung enthält vorteilhafterweise Partikel und/oder Fasern aus einem harten Material. Wenn bei einer an die Substratoberfläche angesaugten Saugvorrichtung der zweite Bereich unter Anpressdruck steht, drücken die Partikel/Fasern auf bzw. in die Substratoberfläche. Letzteres erhöht die Reibung zwischen dem zweiten Bereich und der Substratoberfläche und erhöht damit die Haltekraft der gesamten Saugvorrichtung in Form des Saugnapfes, Saughebers oder Vakuumgreifers, der somit ein höheres Gewicht halten kann.

Im Fall eines Vakuumgreifers kann der Druck anstelle durch die Rückstellkraft des ersten Bereiches auch durch das Anlegen eines Vakuums (durch Vakuumpumpe) erzeugt werden. Als Partikel können dabei sowohl Partikel im herkömmlichen Sinne und/oder auch Fasern, Faserbruchstücke oder Flächengebilde verwendet werden.

Besonders bevorzugt werden harte oder sehr harte Partikel und/oder Fasern aus Glas, Stein (Basalt), Sand, Keramik, Metall, Harze, Korund, bzw. Diamantpartikel und dergleichen einzeln oder in Kombinationen verwendet.

Dabei werden bei raueren Substratoberflächen vorzugsweise größere Partikel und/oder Fasern und bei Substratoberflächen mit einer geringeren Rauheit kleinere Partikel und/oder Fasern verwendet. Bevorzugt weisen die Partikel und/oder Fasern einen Durchmesser von 40 % bis 70 % der Größe der Zwischenräume des Rauheitsprofils der Substratoberfläche auf. Insbesondere weisen die Partikel einen Durchmesser von etwa 60 % der Größe der Zwischenräume der zu haftenden Oberfläche auf.

Meist erreicht man mit Partikeln von 10 µm bis 200 µm Durchmesser recht gute Ergebnisse. Fasern einer Stärke von 5 µm bis 30 µm und 0,1 mm bis 1 mm Länge sind ebenfalls auf den meisten rauen Substratoberflächen einsetzbar. Es können nur Mikrokugeln, nur Fasern oder auch Gemische von verschiedenen Größen und Formen eingesetzt werden, zum Beispiel für Substrate, mit unterschiedlichen Korngrößen und Rautiefen sowie zur Abdeckung von zuvor nicht bekannten Oberflächen.

Ist beispielsweise für spezielle Anwendungen die Substratoberfläche bekannt, kann man auch durch einige Vorversuche mit verschiedenen Materialien des ersten und/oder zweiten Bereiches und/oder Partikeln/Fasern, der Saugvorrichtung die am besten geeignete Materialkonfiguration für diesen Anwendungsfall ermitteln. Neben der Partikelgröße kann auch die Partikelform an die jeweilige Substratoberfläche angepasst werden und es können unterschiedliche Partikelformen und/oder Größen in den zweiten Bereich integriert sein.

In bestimmten Ausführungen ist der zweite Bereich lösbar an dem ersten Bereich befestigt. Dadurch kann der zweite Bereich, der sich bei bestimmten Anwendungen schneller abnutzt, separat gefertigt und bei Bedarf ausgetauscht werden. Ebenso ist eine individuelle Anpassung des zweiten Bereiches an verschiedene Substratoberflächen möglich.

Der zweite Bereich kann auch an den ersten Bereich geklebt und/oder durch ein Vakuum an dem ersten Bereich befestigt sein. Auch eine mechanische Verbindung, beispielsweise durch ineinandergreifende Verbindungselemente, ist denkbar.

Es ist alternativ möglich, die Saugvorrichtung (den Saugnapf oder Vakuumgreifer) einteilig auszubilden oder den zweiten Bereich unlösbar mit dem ersten Bereich zu verbinden.

Die Saugvorrichtung (Saugnapf oder Vakuumgreifer) kann beispielsweise durch 3D-Druck, Abformungsverfahren oder durch ein Zwei-Komponenten-Spritzgießverfahren gefertigt werden. Auch kann der zweite Bereich an den ersten Bereich angespritzt sein. Alternativ werden der erste und der zweite Bereich separat gefertigt und anschließend miteinander lösbar oder unlösbar verbunden.

Es ist auch eine Verfahrenskombination der vorgenannten Verfahren möglich.

Die Saugvorrichtung (Saugnapf oder Vakuumgreifer) weist bevorzugt einen Durchmesser im Bereich von 20 mm bis 25 cm auf. Aber je nach Einsatzfall sind auch deutlich kleinere und deutlich größere Durchmesser denkbar.

Der Durchmesser der Saugvorrichtung (des Saugnapfes oder Vakuumgreifers) sollte dabei auch der Form und Größe des Substrats bzw. des zu haltenden Objektes angepasst sein.

In einer bevorzugten Ausführungsform der Erfindung ist das wenigstens eine zweite Material ein quellfähiges Material und/oder beinhaltet quellfähige Partikel und/oder ist der zweite Bereich an der Saugnapfoberfläche mit einem quellfähigen Material beschichtet.

Vorteilhafterweise können durch das quellfähige Material kleinere Lücken zwischen Saugnapf bzw. Vakuumgreifer und Substratoberfläche geschlossen werden. Dadurch wird beispielsweise die Abdichtung für Langzeitanwendungen auf schwierigen Untergründen, unter Wasser (wie z.B. in Gewässern, im Teich, im Schwimmbad) oder in nasser Umgebung (wie z.B. in Nassräumen) verbessert. Ein geeignetes quellfähiges Material ist beispielsweise Hydrogel. Quellprodukte auf Kautschukbasis und aus Acrylatpolymere sind denkbar sowie sonstige andere quellfähige Materialien.

Der Saugnapf weist bevorzugt ein Anschluss- oder Griffelement und/oder bei Einsatz als Vakuumgreifer einen Anschluss für eine Vakuumpumpe auf, über den ein Vakuum zwischen der Saugnapfoberfläche und einer zu kontaktierenden Substratoberfläche herstellbar ist.

Das Anschluss- oder Griffelement und/oder der Anschluss für eine Vakuumpumpe sind vorzugsweise am ersten Bereich und besonders bevorzugt auf der dem zweiten Bereich gegenüberliegenden Seite des ersten Bereiches angeordnet.

Das Anschluss- oder Griffelement dient der Befestigung von Objekten am Saugnapf. Das Anschluss- oder Griffelement kann ein oder mehrere Schraubgewinde, Haken, Ösen oder sonstige geeignete Befestigungselemente aufweisen oder in Form eines Hakens, einer Öse und dergleichen ausgebildet sein.

Wenn ein Anschluss für eine Vakuumpumpe vorgesehen ist, kann der Saugnapf als Greifer/Vakuumgreifer beispielsweise in Fertigungsanlagen bzw. industrielle oder andere spezielle Anwendungen eingesetzt werden.

Da der zweite Bereich insbesondere bei industriellen Anwendungen schneller verschleißt als der erste Bereich, ist dieser bevorzugt austauschbar an dem ersten Bereich befestigbar.

Die erfindungsgemäße Saugvorrichtung weist vorteilhafterweise im Vergleich zu herkömmlichen Lösungen eine deutlich verbesserte Haftung an rauen, strukturierten und/oder gewölbten Oberflächen, sowie an feuchten Oberflächen und Oberflächen im Nassbereich auf. Durch die Kombination verschiedener erster und zweiter Bereiche kann eine Anpassung/Optimierung an unterschiedliche Anforderungen in Bezug auf unterschiedliche Substratoberflächen ermöglicht werden. Vorteilhafterweise haftet die erfindungsgemäße Saugvorrichtung darüber hinaus effizient an gewölbten Oberflächen.

Bei der präsentierten Erfindung handelt es sich dabei um eine weitere bionische Umsetzung des Clingfish-Saugnapf-Prinzips mit extrem guter Abdichtung auf rauen und/oder gekrümmten Oberflächen und der Ausnutzung erhöhter Reibung.

Die erfindungsgemäße Saugvorrichtung haftet auf Substratoberflächen wie technischen Oberflächen und auch auf natürlichen Oberflächen von beispielsweise Felsen oder sogar einigen Lebewesen oder auch Steinen bzw. Mineralien.

Die Substrate sollten dabei dicht bzw. undurchlässig für Fluide sein.

Mit der erfindungsgemäßen Lösung ist es möglich, beispielsweise unter Wasser technische Elemente an Substratoberflächen zu befestigen, beispielsweise an Schiffsrümpfen, in Schwimmbecken, Teichen, Flussläufen oder auch an Wassertieren, um diese beispielsweise zu markieren.

Es sind aber auch technische Anwendungen im industriellen Bereich möglich. Beispielsweise kann die erfindungsgemäße Lösung in Montage- oder Fertigungsanlagen oder anderen Bereichen als Vakuumgreifer verwendet werden.

Ein weiterer Vorteil besteht darin, dass der erfindungsgemäße Vakuumgreifer zum Ansaugen an eine strukturierte Substratoberfläche eine bessere Abdichtung erzeugt, welche zu geringeren Unterdruckverlusten führt. Dadurch wird Energie eingespart, welche sonst für das aktive Erneuern des Unterdruckes aufgewendet werden müsste. Dadurch ist es möglich einen umweltfreundlicheren, energiesparenden Vakuumsauger bereitzustellen.

Auch für Anwendungen im Haushalt und im Handwerker- bzw. Heimwerkerbereich ergeben sich vielfältige Möglichkeiten. Besonders interessant erscheint beispielsweise der Einsatz eines erfindungsgemäßen Saugnapfes an unebenen Fliesen in Bad und Küche oder die Verbindung von Bauelementen, deren Oberflächen nicht beschädigt werden dürfen.

Die Erfindung wird nachfolgend anhand von Ausführungsbeispielen und zugehörigen Zeichnungen näher erläutert, ohne dabei auf diese beschränkt zu sein.

Dabei zeigen:
- Figur 1:: einen Querschnitt durch eine Ausführungsform des erfindungsgemäßen Saugnapfes, welcher auf eine Substratoberfläche aufgesetzt wurde;
- Figur 2:: einen Querschnitt eines Saugnapfes gemäß Figur 1, der an die Substratoberfläche angepresst wurde;
- Figur 3:: eine Einzelheit X gemäß Figur 2,
- Figur 4: Querschnitt durch eingebettete säulenartige Strukturen,
- Figur 5: Längsschnitt durch eingebettete säulenartige Strukturen im unbelasteten Zustand,
- Figur 6: Längsschnitt durch eingebettete säulenartige Strukturen im belasteten Zustand,
- Figur 7:: einen Querschnitt durch eine weitere Ausführungsform der erfindungsgemäßen Lösung mit einem Vakuumanschluss;
- Figur 8:: eine Draufsicht auf eine Ausführungsform des erfindungsgemäßen Saugnapfes mit einem vollflächigen ersten Bereich;
- Figur 9:: eine Draufsicht auf eine weitere Ausführungsform des erfindungsgemäßen Saugnapfes mit einem gitterförmigen ersten Bereich;
- Figur 10:: eine Draufsicht auf noch eine weitere Ausführungsform des erfindungsgemäβen Saugnapfes mit einem sternförmigen ersten Bereich; und
- Figur 11:: eine Draufsicht auf noch eine weitere Ausführungsform des erfindungsgemäßen Saugnapfes mit einem alternativ geformten ersten Bereich,
- Figur 12: die Prinzipdarstellung eines Vakuumsaugers mit einem ersten Bereich aus einem harten Material, wie z.B. Stahl oder Aluminium in der Draufsicht,
- Figur 13: Vakuumsauger gem. Figur 9 in der Schnittdarstellung als Prinzipskizze,
- Figur 14: eine Variante des zweiten Bereiches 4 des Saugnapfes von unten,
- Figur 15: a) Ansicht des ersten Bereiches von unten mit Erhöhungen / Strukturen, b) Erhöhungen / Strukturen im ersten Bereich, die bei Druckausübung in den zweiten Bereich und in das Rauheitsprofil der Substratoberfläche gedrückt werden,
- Figur 16: Befestigungsvarianten des Saugnapfes a) und b) an einem Tränenblech befestigter Saugnapf, b) an dem ein Stein mit einem Gewicht von ca. 1 kg befestigt ist,
- Figur 17: Diagramm zwischen Haltekraft in kg und Dicke L2 der zweiten Schicht in mm.

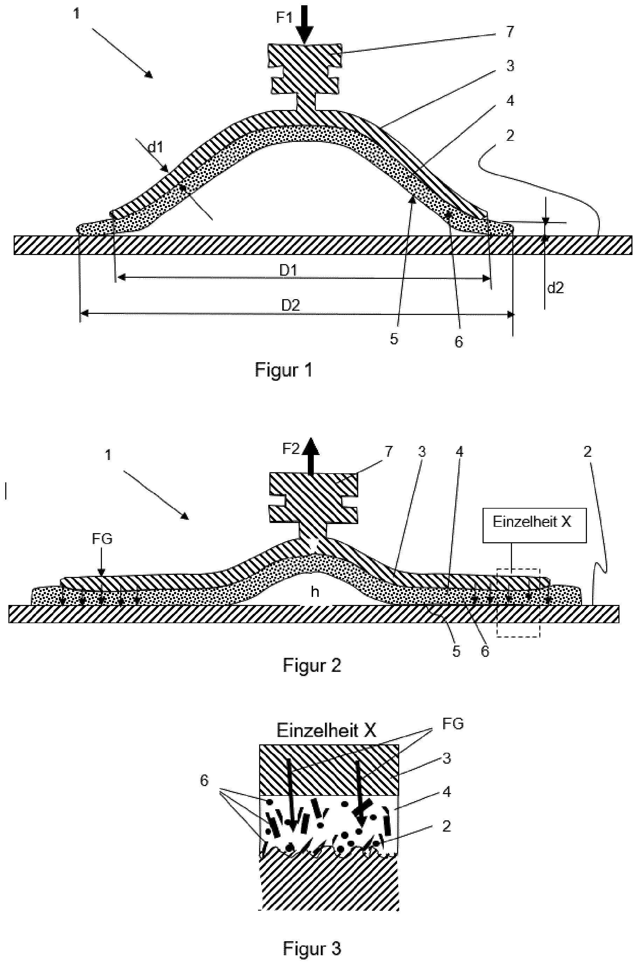

In **Figur 1** ist ein Querschnitt durch eine Ausführungsform des erfindungsgemäßen Saugnapfes 1, welcher auf eine Substratoberfläche 2 aufgelegt wurde, dargestellt. Der Saugnapf 1 weist einen ersten Bereich 3 mit einer Dicke d1 und einen zweiten Bereich 4 mit einer Dicke d2 auf. Der erste Bereich 3 ist aus einem ersten Material ausgebildet. Der zweite Bereich 4 ist aus einem zweiten Material ausgebildet, welches sehr viel weicher ist als das erste Material des ersten Bereiches 3. Der zweite Bereich 4 ist lösbar oder unlösbar mit dem ersten Bereich 3 verbunden oder mit diesem einteilig ausgebildet. Sowohl der erste Bereich 3, als auch der zweite Bereich 4 sind vollflächig ausgebildet. Der Außendurchmesser D1 des ersten Bereiches 3 ist kleiner als der Außendurchmesser D2 des zweiten Bereiches 4.

Die Saugnapfoberfläche 5 gelangt bei Auflage des Saugnapfes 1 auf die Substratoberfläche 2 eines Substrats bzw. Bauteils/Gegenstandes mit dieser Substratoberfläche 2 in Kontakt.

In das zweite Material des zweiten Bereiches 4 sind Partikel 6 eingebettet. Diese werden bei Druckeinwirkung in Richtung zur Substratoberfläche 2, beispielsweise durch Drücken auf ein Anschluss- oder Griffelement 7 des Saugnapfes 1 in Richtung zur Substratoberfläche 2 oder anschließend durch die Rückstellkraft des ersten Bereiches 3, durch den mit dem vergleichsweise weichen zweiten Bereich 4 gegen die Saugnapfoberfläche 5 und somit gegen die Substratoberfläche 2 gedrückt, wo sie sich in Ausnehmungen und/oder Vertiefungen der Substratoberfläche 2 anordnen können bzw. zumindest teilweise in die Ausnehmungen/Vertiefungen eingreifen und somit eine Reibungserhöhung zwischen der Saugnapfoberfläche 5 und der Substratoberfläche 2 herbeiführen. (Siehe auch **Figur 3****).**

Durch das Drücken des zweiten Bereiches 4 in Richtung zur Substratoberfläche 2 wird gleichzeitig auch das Fluid zwischen dem Hohlraum bzw. Innenraum des Saugnapfes 1 und der Substratoberfläche 2 zumindest teilweise herausgedrückt und dadurch ein Unterdruck zum Umgebungsdruck erzeugt, wodurch der Saugnapf 1 nach dem Lösen des Druckes/der Kraft auf den ersten Bereich 3 an der Substratoberfläche 2 haftet. Dies funktioniert bei Fluiden in Form von gasförmigen Medien (z. B. in Luft) und auch bei flüssigen Medien (z. B. in Wasser).

Als nicht beschränkendes Ausführungsbeispiel sei ein Saugnapf 1 mit einem Durchmesser (entspricht dem Außendurchmesser D1 des ersten Bereiches 3) von etwa 50 mm bis 70 mm, bevorzugt 65 mm genannt, dessen zweiter Bereich 4 eine Dicke d2 von 1 mm bis 5 mm, bevorzugt 2,5 mm bis 4 mm aufweist. Das erste Material des ersten Bereiches 3 weist eine Härte von 60-80 Shore A sowie ein komplexes Modul G von 10 bis 50 MPa auf, während das zweite Material des zweiten Bereiches 4 eine Härte von Shore 00-10 bis Shore 00-35 und ein komplexes Modul G von 0,025 MPa aufweist.

Ein solcher exemplarischer Saugnapf kann sich sehr gut an Substratoberflächen 2 mit sehr großer Rauigkeit, wie z.B. Substratoberflächen mit Rt (Rautiefe) bis zu 1mm bis 2 mm und größer oder einer Korngröße von 1 mm bis 2 mm oder Unterschieden von 1 mm bis 2 mm in der Strukturhöhe der Substratoberfläche 2, anlagern. Ein solcher Saugnapf 1 kann auch effektiv an Substratoberflächen 2 mit einem Krümmungsradius von 2,5 cm bis 4 cm oder weniger bzw. auch mehr haften. Dazu wird der Saugnapf 1 mit einer Anpresskraft F1 **(siehe** **Figur 1****)** in Richtung zur Substratoberfläche 2 gepresst. Da der Saugnapf 1 von der Substratoberfläche 2 weg konvex gewölbt ist, wird der zwischen Saugnapfoberfläche 5 und Substratoberfläche 2 des Substrates gebildete Hohlraum reduziert und im Vergleich zum Umgebungsdruck ein Unterdruck erzeugt.

**Figur 2** zeigt einen Querschnitt durch dieselbe Ausführungsform des erfindungsgemäßen Saugnapfes 1 (gem. Figur 1), der an die Substratoberfläche 2 angepresst wurde und daran haftet. Die Haftung erfolgt dadurch, dass der elastische erste Bereich 3 eine Rückstellkraft in seine Ausgangsform gemäß Figur 1 ausübt, wodurch ein Unterdruck in dem Hohlraum h zwischen der Substratoberfläche 2 und dem zweiten Bereich 4 erzeugt wird.

Es ist erkennbar, dass sowohl der erste Bereich 3, als auch der zweite Bereich 4 elastisch nachgeben und der Saugnapf 1 mit der Saugnapfoberfläche 5 an die Substratoberfläche 2 gedrückt wird und sich der zweite Bereich 4 mit einem breiten Randbereich an die Substratoberfläche 2 angelegt hat. Die in das Material des zweiten Bereiches 4 integrierten Partikel 6 sind sehr viel härter als das Material des zweiten Bereiches 4 und werden durch den vergleichsweise weichen zweiten Bereich 4 gegen die Substratoberfläche 2 gedrückt, wo sie in Ausnehmungen und/oder Vertiefungen der Substratoberfläche 2 zumindest teilweise eingedrückt werden (Siehe **Figur 3****)** und somit eine Reibungserhöhung herbeiführen.

Wird eine vertikal zur Substratoberfläche 2 gerichtete Abzugskraft F2 auf das Anschluss- oder Griffelement 7 ausgeübt, so wird der Randbereich des ersten Bereiches 3 durch seine Rückstellkraft (sowie den gegebenenfalls zunehmenden Unterdruck) noch stärker gegen die Substratoberfläche 2 mit einer Gegenkraft FG gedrückt und dadurch die Reibung zwischen der Saugnapfoberfläche 5 und der Substratoberfläche 2 erhöht. Erst wenn die Kraft F2 so groß wird, dass die Reibkraft zwischen Saugnapfoberfläche 5 und der Substratoberfläche 2 über schritten wird, löst sich der Saugnapf 1 von der Substratoberfläche 2

Es besteht auch die Möglichkeit zum Lösen des Saugnapfes dessen Randbereich zumindest bereichsweise anzuheben, so dass dadurch ein Druckausgleich zum Umgebungsdruck erfolgen kann.

In **Figur 3** wird anhand der vergrößerten Einzelheit X gezeigt, wie Partikel 5 in die Ausnehmungen der Substratoberfläche 2 eingepresst werden, wodurch die Reibung zwischen der Substratoberfläche 2 und der hier nicht bezeichneten Saugnapfoberfläche an dem zweiten Bereich 4, der sich unter dem ersten Bereich 3 befindet, erhöht wird.

Bei Saughebern erfolgt nach dem Aufsetzen des Saugnapfes auf das Substrat ein Anheben in der Mitte des ersten Bereiches, wodurch der Unterdruck erzeugt wird und der Saugnapf am Substrat haftet.

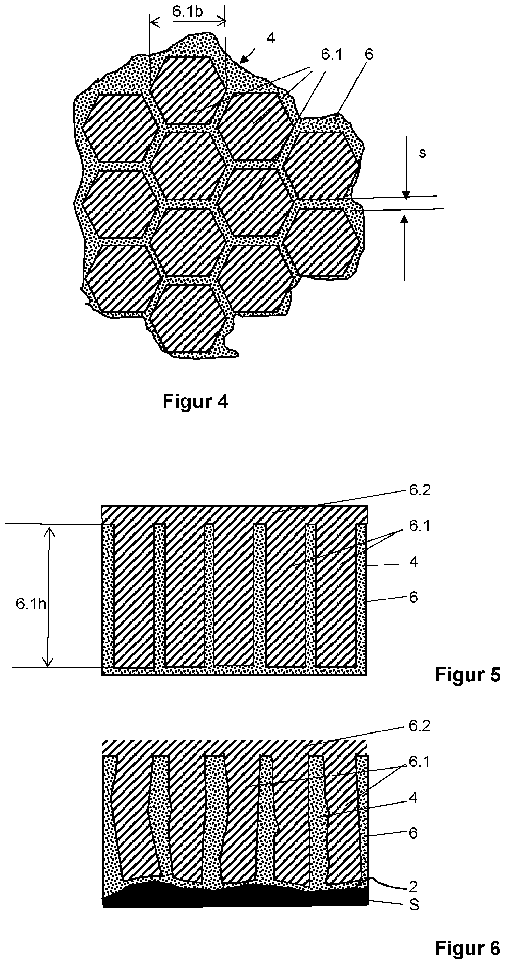

**Figur 4** zeigt einen beispielhaften Querschnitt und **Figur 5** einen Längsschnitt durch in das zweite Material des zweiten Bereichs 4 eingebettete Säulen 6.1, die hier sechseckig ausgebildet und wabenartig angeordnet sind. Der im Querschnitt breiteste Bereich 6.1b der Säulen 6.1 (bei einem runden Querschnitt der Durchmesser) beträgt 0,1mm bis 5 mm. Die Abstände s zwischen den Säulen 6.1 betragen bevorzugt zwischen 0,1 bis 0,5 mm. Die Höhe der Säulen 6.1h beträgt bevorzugt zwischen 0,1 und 0,5 mm.

Die Abmessungen der Säulen 6 und deren Zwischenräume können den Abmessungen des Saugnapfes, insbesondere der Dicke des zweiten Bereiches angepasst werden und können bei sehr großen Durchmessern und/oder Dicken des zweiten Bereiches 4 auch größer sein.

Zusätzlich können in das Material des zweiten Bereiches 4 Partikel 6 eingebettet sein. Der Längsschnitt durch eingebettete säulenartige Strukturen bzw. Säulen 6.1 gemäß Figur 4 und 5 im belasteten Zustand wird in **Figur 6** dargestellt. Deren Höhe h beträgt insbesondere 0.2 bis 4mm. Durch die Säulen 6.1, hier in Verbindung mit den eingebetteten Partikeln 6, erhöhen sich Stabilität und Reibungseigenschaften des zweiten Bereiches 4 und gewährleisten gleichzeitig eine extrem gute Anpassung an starke Oberflächenunebenheiten des in Figur 6 dargestellten Substrates S. Das ultraweiche umgebende Material ermöglicht eine gewisse Bewegungsfähigkeit der Säulen 6.1 zum Untergrund / Substrat S hin bei gleichzeitiger Sicherstellung der Abdichtung zu den Seiten des Saugnapfes und zum Untergrund /Substrat S. Aus den Figuren 5 und 6 ist ersichtlich, dass die Säulen 6.1 an ihrem vom Substrat S abgewandten Ende untereinander durch eine Trägerschicht 6.2 verbunden sind und mit dieser bevorzugt einteilig ausgebildet sind.

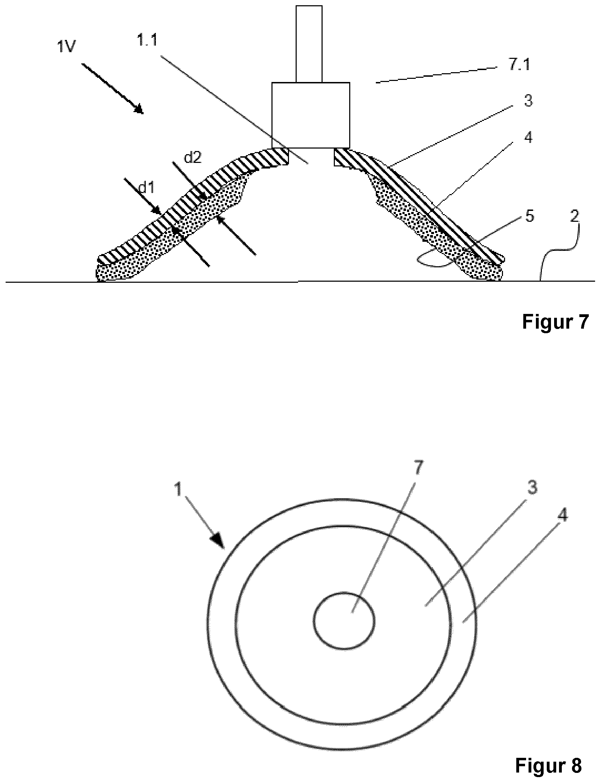

In **Figur 7** ist ein Querschnitt durch eine weitere Ausführungsform der erfindungsgemäßen Lösung in Form eines Vakuumgreifers 1V, welcher auf eine Substratoberfläche 2 aufgelegt wurde und einen Vakuumanschluss 7.1 aufweist, dargestellt. In dieser Ausführungsform ist der zweite Bereich 4 nicht vollflächig, sondern ringförmig ausgebildet. Er erstreckt sich bei dieser Variante auch nicht umfangsseitig über den umfangsseitigen Randbereich des ersten Bereiches 3, was jedoch auch möglich wäre.

In beiden Fällen wird eine optimale Abdichtung des Kontaktbereiches zwischen der Substratoberfläche 2, an die der Saugnapf 1 gehaftet werden soll und dem zweiten Bereich 4 gewährleistet. Der Saugnapf 1 ist im Bereich des Vakuumanschlusses 7.1 mit einem Durchbruch 1.1 versehen, so dass Luft abgesaugt und zugeführt werden kann. Der erste Bereich 3 weist eine Dicke d1 auf und der zweite Bereich 4 eine Dicke d2. Die Dicke d2 des zweiten Bereiches 4 ist hier nur geringfügig größer als die Dicke d1 des ersten Bereiches3.

Nach dem Auflegen des Vakuumgreifers 1V auf die Substratoberfläche 2 wird dann die Luft aus dem Raum zwischen der Substratoberfläche 2 und der Saugnapfoberfläche 5 gesaugt, wodurch sich der Vakuumgreifer 1V mit seiner Saugnapfoberfläche 5 an der Substratoberfläche 2 ansaugt bzw. anpresst und fest daran haftet (nicht dargestellt). Zum Lösen wird über den Vakuumanschluss 7.1 wieder Luft zugeführt, wodurch die Haftung zwischen der Saugnapfoberfläche 5 und der Substratoberfläche 2 gelöst wird.

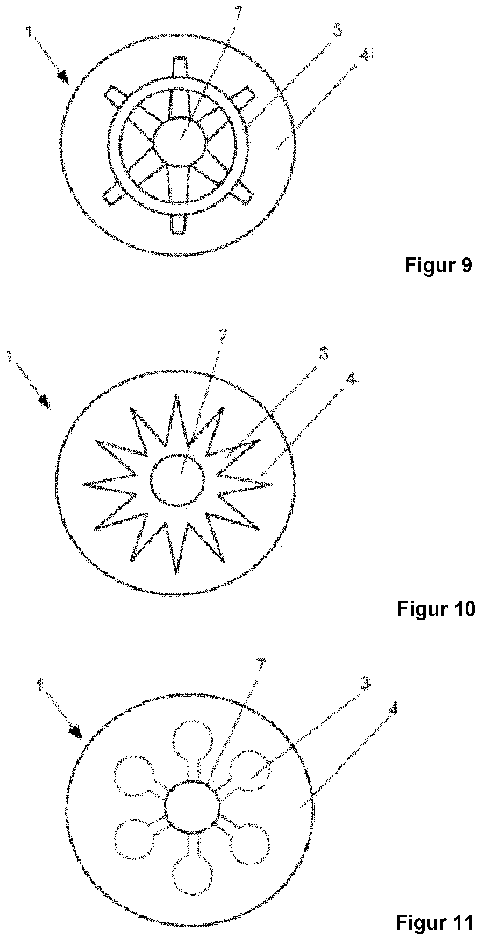

Eine Draufsicht auf eine Ausführungsform des erfindungsgemäßen Saugnapfes 1 mit einem vollflächigen ersten Bereich 3 ist in **Figur 8** dargestellt. Es ist ebenfalls möglich, dass der erste Bereich 3, wie in **Figur 9** angedeutet, zwischen dem Anschluss- oder Griffelement 7 und dem Randbereich des Saugnapfes 1 gitterförmig oder, wie in **Figur 10** dargestellt, sternförmig verläuft.

Auch andere Formen des ersten Bereiches 3, wie beispielhaft in **Figur 11** dargestellt, sind denkbar, insofern sie eine gleichmäßige Druckübertragung auf den zweiten Bereich 4 gewährleisten.

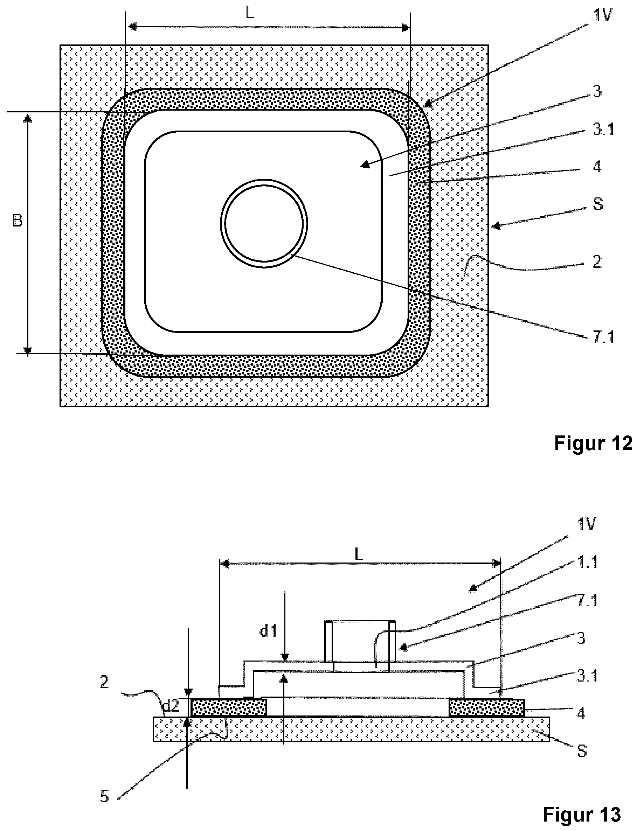

In den **Figuren 12 und 13** wird für industrielle Anwendungen ein Vakuumgreifer 1V gezeigt, der eine im Wesentlichen in der Draufsicht viereckige Grundform mit einer Länge L und einer Breite B des ersten Bereiches 3 aufweist. Der erste Bereich 3 ist im Wesentlichen starr und gehäuseartig mit einer geringen Dicke d1 ausgeführt und weist in Richtung zum zweiten Bereich 4 einen nach außen weisenden Flansch 3.1 auf. Der erste Bereich 3 kann beispielsweise aus Metall wie Stahl oder Aluminium oder auch aus einem harten Kunststoff oder einer Kombination der vorgenannten Materialien bestehen. Unter dem Flansch 3.1 sitzt der zweite Bereich 4, der in der Art eines umlaufenden Streifens ausgebildet ist, der dem Verlauf des Flansches 3.1 folgt und der eine Dicke d2 aufweist.

Bei der hier dargestellten Variante ragt der zweite Bereich 4 nach innen und außen über den Flansch 3.1. Gemäß einer nicht dargestellten Variante kann der zweite Bereich 4 auch nur nach innen oder außen über den Flansch 3.1 überstehen oder auch mit diesem abschließen.

Der zweite Bereich 4 weist ebenfalls Partikel 6 und/oder Fasern auf (die hier nicht bezeichnet sind) und liegt mit seiner Saugnapfoberfläche 5 auf der Substratoberfläche 2 eines Substrates S auf. Der erste Bereich 3 weist einen Durchbruch 1.1 auf, an den sich ein Anschluss 7.1 für einen nicht dargestellten Vakuumschlauch anschließt, der mit einer Vakuumpumpe verbunden ist. Wenn die Saugnapfoberfläche 5 auf der Substratoberfläche 2 aufliegt wird über die Vakuumpumpe in dem Raum zwischen dem Vakuumgreifer 1V und der Substratoberfläche 2 Luft abgesaugt, wodurch im Vergleich zum Umgebungsdruck ein Unterdruck erzeugt wird und der Vakuumgreifer 1V mit seinen zweiten Bereich 4, auf welchen der Flansch 3.1 des ersten Bereiches 3 wirkt, gegen die Substratoberfläche 2 gepresst wird.

Das an dem Vakuumgreifer 1V befestigte Substrat S kann nun mittels des Vakuumgreifers 1V (an dem auch ein oder mehrere nicht dargestellte weitere Handhabungselemente vorgesehen sein können) angehoben und entsprechend der Montage- bzw. Fertigungsaufgabe bewegt und wieder abgelegt werden. Dann wird der Vakuumgreifer 1V (bzw. Vakuumglocke) durch Angleichung des Drucks in seinem Innenraum mit dem Umgebungsdruck oder durch einen leichten Überdruck von der Substratoberfläche 2 entfernt.

Der zweite Bereich 4 ist bevorzugt lösbar und luftdicht mit dem ersten Bereich 3 verbunden und kann dadurch bei Verschleiß oder bei einer anderen Substratoberfläche gewechselt werden.

Die Dicke d2 des zweiten Bereiches 4 sollte bei einer Saugvorrichtung in einem unbelasteten Zustand mehr als 2,5 %, insbesondere 3 bis 8%, besonders bevorzugt 3,5-7% der größten sich in der Ebene der Substratoberfläche 2 erstreckenden Abmessung (je nach Gestaltung des Außendurchmessers D1 oder einer Länge L oder Breite B) des ersten Bereiches 3 betragen. Bei Vakuumgreifern, die einen sehr großen Durchmesser bzw. eine sehr große Länge oder Breite aufweisen und bei denen der Andruck durch das Vakuum und nicht durch die Rückstellkraft des ersten Bereiches erzeugt wird, kann die Dicke d2 des zweiten Bereiches auch weniger als 2,5 % von D1, L oder B betragen.

Gemäß eines nicht dargestellten Ausführungsbeispiels können die Partikel/Fasern und/oder die säulenartigen Strukturen in der zweiten Schicht/in dem zweiten Bereich 4 auch nicht über den gesamten Querschnitt des zweiten Bereiches 4 verteilt sein, sondern sich in dem Material des zweiten Bereiches auch nur in Richtung zur Saugnapfoberfläche befinden. Weiterhin ist es gemäß einer nicht dargestellten Variante möglich, den sehr weichen/elastischen zweiten Bereich ohne Fasern/Partikel und/oder die säulenartigen Strukturen auszuführen und mit einer dünnen ebenfalls elastischen sehr weichen weiteren Schicht zu beschichten, welche die Partikel/Fasern und/oder die säulenartigen Strukturen enthält. Es ist weiterhin möglich die Partikel/Fasern und/oder die säulenartigen Strukturen in unterschiedlichen Bereichen der zweiten ultraweichen Schicht 4 anzuordnen.

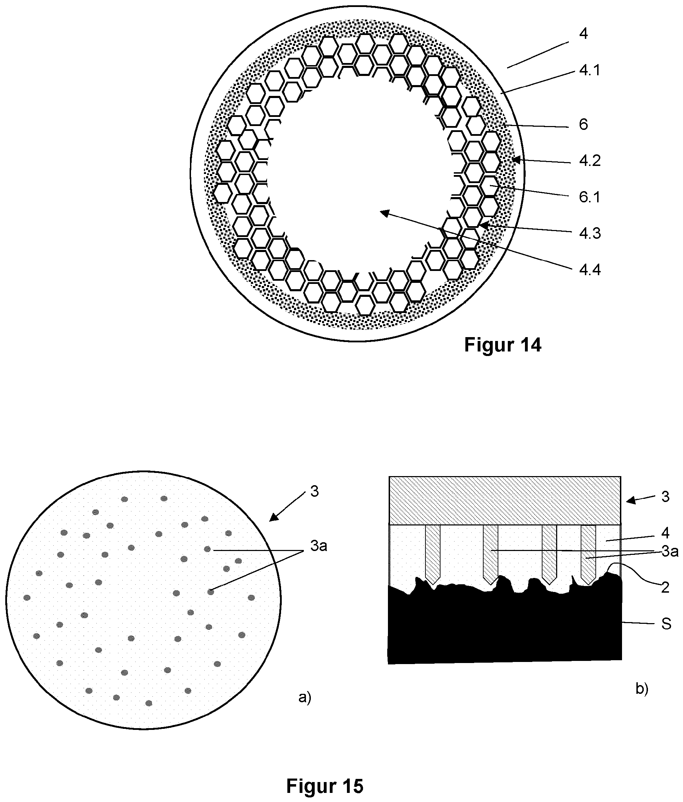

Dies ist beispielhaft in **Figur 14** dargestellt. In einem äußeren ersten ringartigen Bereich 4.1 des zweiten Bereiches 4 sind keine Partikel angeordnet, daran radial innen anschließend erstreckt sich ein zweiter ringförmiger Bereich 4.2 mit Partikeln 6 und daran radial nach innen ein dritter ringförmiger Bereich 4.3 mit Säulen 6.1. Innerhalb des restlichen inneren Bereiches 4.4 sind keine Partikel 6 oder Säulen 6.1 integriert. Die Reihenfolge der Bereiche kann auch wechseln. Weiterhin kann gemäß eines nicht dargestellten Beispiels auch ein ringförmiger Bereich mit größeren Partikeln mit einem ringförmigen Bereich mit kleineren Patriken kombiniert sein und dies ggf. auch wiederum mit säulenartigen Strukturen.

Gemäß **Figur 15** kann eine Verbesserung der Reibung auch durch in dem ersten Bereich 3 vorhandene Erhöhungen 3a / Strukturen, welche in den zweiten Bereich 4 hineinragen, erreicht werden. Bei Druckausübung gegen die Substratoberfläche 2 werden diese beispielsweise punktförmigen Erhöhungen des ersten Bereichs 3 in die Täler der Oberflächenstruktur der Substratoberfläche 2 eingedrückt und erhöhen so die Reibung.

**Figur 15** zeigt dabei in Darstellung a) die Ansicht des ersten Bereiches 3 von unten mit Erhöhungen 3a und Darstellung b) die Erhöhungen / Strukturen im ersten Bereich 3, die bei Druckausübung in den zweiten Bereich 4 und in das Rauheitsprofil der Substratoberfläche 2 gedrückt werden.

Wichtig ist dabei, dass die Erhöhungen 3a den zweiten Bereich 4 in Richtung zum Substrat S nicht komplett durchdringen sondern nur stark in diesen eingepresst werden.

Der erfindungsgemäße Saugnapf kann auf sehr rauen Oberflächen, wie beispielsweise Tränenblech (dessen Oberfläche teilweise eine Strukturhöhe bis 2mm aufweist) und auch unter Wasser eingesetzt werden. Als Tränenblech oder Riffelblech bezeichnet man Bleche mit diagonal gerippter Struktur.

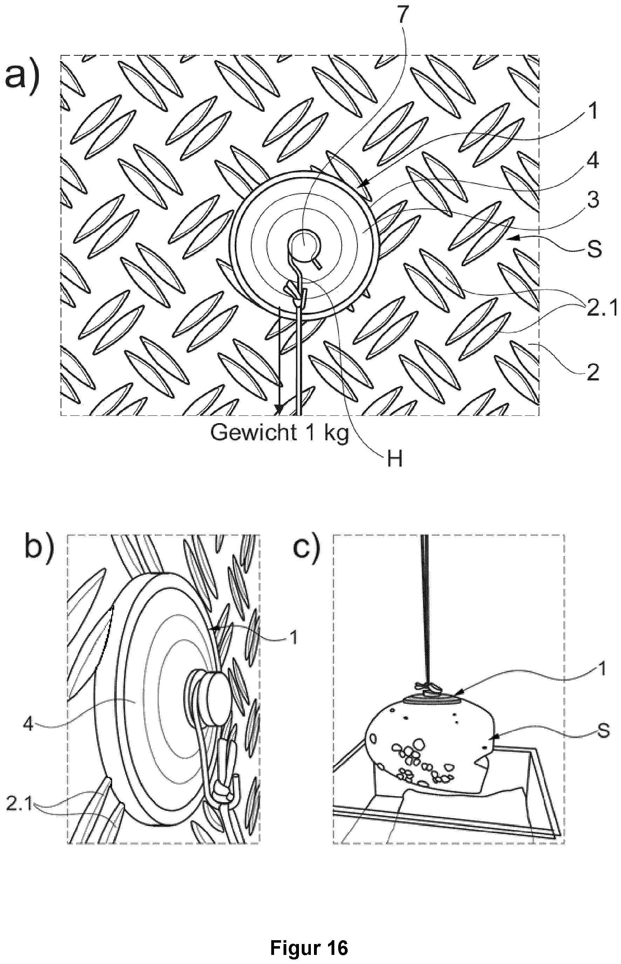

Die Befestigung eines Saugnapfes 1 ist in **Figur 16** Darstellung a) und b) an einem Tränenblech als Substrat S und in Darstellung c) an einem Stein als Substrat S dargestellt. Das Tränenblech als Substrat S hat versetzt zueinander angeordnete Erhebungen 2.1 an seiner Substratoberfläche 2 mit einer Strukturhöhe von 1,2 mm und der Stein als Substrat S eine Rauheit / Struktur von 1-2mm mit zusätzlich unterliegender Welligkeit und Formabweichung. Durch das Andrücken des Saugnapfes 1 formt sich die ultraweiche zweite Schicht 4 an die Substratoberfläche 2 an und umschließt dicht die Erhebungen 2.1, was besonders gut in Darstellung b) erkennbar ist, so dass sich ein Unterdruck ausbilden kann und der Saugnapf 1 an dem Substrat S haftet. Der Saugnapf 1 wurde dann an dem Anschluss/Griffelement 7 mittels eines hieran befestigten Hakens H mit einem Gewicht in Höhe von 0,8 kg belastet. Gemäß Darstellung c) hängt an dem Saugnapf 1 ein Substrat S - hier ein Stein mit einem Gewicht von ungefähr 1 kg.

Es besteht ein klarer Zusammenhang zwischen der Dicke des zweiten Bereiches 4 und der maximalen Rauheit bzw. Strukturierung der Substratoberfläche, auf welcher die Saugnäpfe halten können. Die optimale Dicke des zweiten Bereiches 4 liegt bei einem bevorzugten konkreten Ausführungsbeispiel bei einem Saugnapf entsprechend Figur 1 mit d1 = 60 mm, bei 2,5-5 mm bzw. 4-8% des Durchmessers d1, siehe nachfolgende **Tabelle 1.**

**Tabelle 1: Zusammenhang zwischen der Dicke des zweiten Bereiches 4 und der Fähigkeit auf Substraten mit ansteigender Rauheit zu haften. X haftet, (x) haftet teilweise, - haftet nicht**

| **Zweiter Bereich 4** | | **Substrat (mit Angabe der Korngröße der Substratoberfläche in mm)** | | | | | | |
|---|---|---|---|---|---|---|---|---|
| **Dicke in:** | | **A1** | **A2** | **A3** | **A4** | **A5** | **A6** | **A7** |
| **mm** | % | **0 mm** | **0,1 mm** | **0,2 mm** | **0,5 mm** | **1-2 mm** | **1,5-2,5** | **2-6 mm** |
| **1** | **1,7** | X | X | X | - | - | - | - |
| **1,5** | **2,5** | X | X | X | - | - | - | - |
| **2** | **3,3** | X | X | X | (X) | (X) | - | - |
| **2,5** | **4,2** | X | X | X | X | X | - | - |
| **3** | **5** | X | X | X | X | X | X | - |
| **4** | **6,7** | X | X | X | (X) | X | X | (X) |
| **5** | **8,3** | X | X | X | X | X | X | (X) |
| **6** | **10** | X | X | (X) | (X) | - | - | - |

Mit zunehmender Dicke des zweiten Bereiches 4 steigt die tolerierte Rauheit proportional an. Ein ultraweicher zweiter Bereich 4 geringer Dicke ermöglicht dementsprechend nur die Haftung auf leicht rauen Oberflächen (bis Korngröße 200 µm). Auf sehr rauen Oberflächen versagen Saugnäpfe mit zu geringer Dicke des zweiten Bereiches. Erst eine Mindestdicke von 2,5 mm (4,2 % des Saugnapfdurchmessers d1) ermöglicht im Ausführungsbeispiel eine zuverlässige Haftung auf sehr rauen Oberflächen (A4-A7).

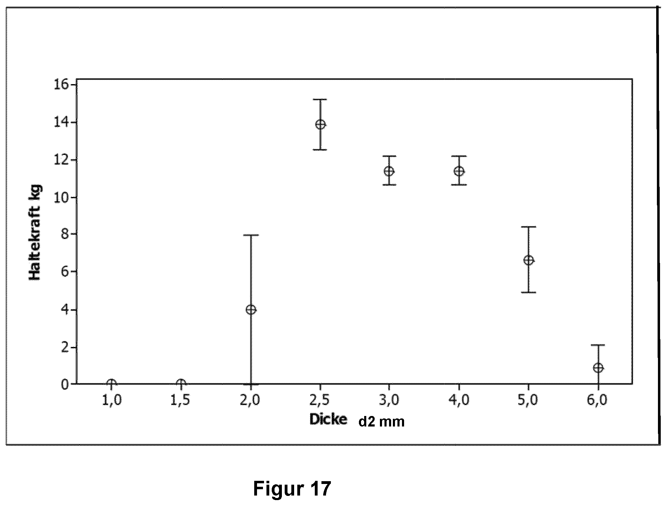

**Figur 17** zeigt auch die Haftkraft des beschriebenen Ausführungsbeispiels mit ansteigender Dicke d2 des zweiten Bereiches 4 auf einem sehr rauen Substrat von 1-2 mm Korngröße. Während Saugnäpfe unter 2 mm Dicke d2 des zweiten Bereiches nicht haften, wird eine zuverlässige Haftung mit maximalen Haftkräften bis 14kg (Normalkraft) für einen zweiten Bereich von 2,5-4mm (4,2-6,7% % des Saugnapfdurchmessers d1) erzielt. Aus der Figur 16 geht der Zusammenhang zwischen der Haltekraft eines Saugnapfes in kg und der Dicke d2 des zweiten Bereiches eines Saugnapfes in mm hervor.

Es ist möglich, durch Versuche die Konfiguration des erfindungsgemäßen Saugnapfes festzulegen, die für eine Substratoberfläche am besten geeignet ist.

### Bezugszeichenliste

- 1: Saugnapf
- 1V: Vakuumgreifer
- 1.1: Durchbruch
- 2: Substratoberfläche
- 2.1: Erhebungen
- 3: Erster Bereich
- 3.1: Flansch
- 3a: Erhöhungen
- 4: Zweiter Bereich
- 4.1: erster ringförmiger Bereich
- 4.2: zweiter ringförmiger Bereich
- 4.3: dritter ringförmiger Bereich
- 4.4: innerer Bereich
- 5: Saugnapfoberfläche
- 6: Partikel
- 6.1: Säulen
- 6.1b: breitester Bereich
- 6.1h: Höhe
- 7: Anschluss- oder Griffelement
- 7.1: Vakuumanschluss
- B: Breite
- D1: Außendurchmesser des ersten Bereiches
- D2: Außendurchmesser des zweiten Bereiches
- d1: Dicke des ersten Bereiches
- d2: Dicke des zweiten Bereiches
- F1: Anpresskraft
- F2: Abzugskraft
- FG: Gegenkraft
- h: Hohlraum
- H: Haken
- L: Länge
- S: Substrat

## Patentansprüche

1. Saugvorrichtung, insbesondere Saugnapf (1), Saugheber oder Vakuumgreifer (1V), zur reversiblen Haftung an einer Substratoberfläche (2), aufweisend einen ersten Bereich (3), der der Betätigung der Saugvorrichtung dient, und einen zweiten Bereich (4), der über eine Saugnapfoberfläche (5) mit der Substratoberfläche (2) in Kontakt bringbar ist, wobei der erste Bereich (3) aus wenigstens einem härteren ersten Material und der zweite Bereich (4) aus einem in Bezug auf das erste Material weicheren zweiten Material besteht, wobei das zweite Material ein Material mit einer Härte von Shore 00 kleiner 50 ist, so dass sich der zweite Bereich (4) an raue, unebene und/oder gekrümmte Substratoberflächen (2) umso besser ansaugt, je weicher und dicker das zweite Material ist, **dadurch gekennzeichnet, dass** die Dicke (d2) des zweiten Bereichs (4) in einem unbelasteten Zustand mindestens 2,5 % eines Außendurchmessers (D1) oder einer Länge (L) oder Breite (B) des ersten Bereiches (3) beträgt und dass der zweite Bereich (4) in seiner radialen Bewegungsfreiheit weder durch innere noch durch äu-ßere Anschläge des ersten Bereichs (3) eingeschränkt ist.

2. Saugvorrichtung, insbesondere Saugnapf (1), Saugheber oder Vakuumgreifer (1V), zur reversiblen Haftung an einer Substratoberfläche (2), aufweisend einen ersten Bereich (3), der der Betätigung der Saugvorrichtung dient, und einen zweiten Bereich (4), der über eine Saugnapfoberfläche (5) mit der Substratoberfläche (2) in Kontakt bringbar ist, wobei der erste Bereich (3) aus wenigstens einem härteren ersten Material und der zweite Bereich (4) aus einem in Bezug auf das erste Material weicheren zweiten Material besteht, wobei das zweite Material ein ultraweiches Material mit einer Härte von Shore 00 kleiner 50 ist und wobei in das eine in Bezug auf das erste Material weichere zweite Material Partikel (6) und/oder Fasern und/oder Säulen oder säulenartigen Strukturen integriert sind, die härter sind als das zweite Material und die bei einer auf die Saugnapfoberfläche in Richtung zur Substratoberfläche wirkenden Kraft in Richtung zur Substratoberfläche gedrückt werden und sich an eine gekrümmte Kontur der Substratoberfläche anpressen und/oder in Ausnehmungen eines Rauheitsprofils der Substratoberfläche zumindest teilweise pressbar sind.

3. Saugvorrichtung nach Anspruch 1oder 2, **dadurch gekennzeichnet, dass** das Material des zweiten Bereiches (4) eine Härte von kleiner/gleich Shore 00 35 aufweist.

4. Saugvorrichtung nach einem oder mehreren der vorgenannten Ansprüche, **dadurch gekennzeichnet, dass** der zweite Bereich (4) ausgehend von einem umfangsseitigen Rand des ersten Bereiches (3) über mindestens 55 % einer in Richtung der Substratoberfläche (2) weisenden gesamten Fläche des ersten Bereiches (3) ausgebildet ist.

5. Saugvorrichtung nach einem oder mehreren der vorgenannten Ansprüche, **dadurch gekennzeichnet, dass** der zweite Bereich (4) über mindestens 65% der gesamten Saugnapffläche des ersten Bereiches (3) ausgebildet ist.

6. Saugvorrichtung nach einem oder mehreren der vorgenannten Ansprüche, **dadurch gekennzeichnet, dass** der zweite Bereich (4) über mindestens 75% der gesamten Saugnapffläche des ersten Bereiches (3) ausgebildet ist.

7. Saugvorrichtung nach einem oder mehreren der vorgenannten Ansprüche, **dadurch gekennzeichnet, dass** das Material des zweiten Bereiches (4) eine Dicke von 3 % bis 8 % eines Außendurchmessers (D1) oder einer Länge (L) oder Breite (B) des ersten Bereiches (3) beträgt.

8. Saugvorrichtung nach einem oder mehreren der vorgenannten Ansprüche, **dadurch gekennzeichnet, dass** das Material des zweiten Bereiches (4) eine Dicke von 3,5 % bis 7 %, eines Außendurchmessers (D1) oder einer Länge (L) oder Breite (B) des ersten Bereiches (3) beträgt.

9. Saugvorrichtung nach einem oder mehreren der vorgenannten Ansprüche, **dadurch gekennzeichnet, dass** der erste Bereich (3) einen Außendurchmesser (D1) und der zweite Bereich (4) einen im Vergleich dazu größeren Außendurchmesser (D2) aufweist.

10. Saugvorrichtung nach einem oder mehreren der vorgenannten Ansprüche, **dadurch gekennzeichnet, dass** das wenigstens eine zweite Material des zweiten Bereichs (4) aus wenigstens einem Polymer und/oder wenigstens einem Elastomer oder einer Kombination aus jeweils einem oder mehreren Polymeren und/oder Elastomeren besteht.

11. Saugvorrichtung nach einem oder mehreren der vorgenannten Ansprüche, **dadurch gekennzeichnet, dass** innerhalb des zweiten Bereiches (4) Säulen mit rundem oder mehreckigem Querschnitt eingebettet sind, die aus einem elastischen Material bestehen, welches härter ist als das Material des zweiten Bereiches (4).

12. Saugvorrichtung nach einem oder mehreren der vorgenannten Ansprüche, **dadurch gekennzeichnet, dass** in dem ersten Bereich (3) Erhöhungen und/oder eine Struktur ausgebildet ist/sind, die in den zweiten Bereich (4) hinein ragen/ragt und bei Druckausübung in die zweite Schicht (4) und die Substratoberfläche (2) pressbar sind.

13. Saugvorrichtung nach einem oder mehreren der vorgenannten Ansprüche, **dadurch gekennzeichnet, dass** das wenigstens eine zweite Material des zweiten Bereiches (4) ein quellfähiges Material ist und/oder das zweite Material quellfähige Partikel enthält und/oder der zweite Bereich (4) an der Saugnapfoberfläche (5) mit einem quellfähigen Material beschichtet ist.

14. Saugvorrichtung nach einem oder mehreren der vorgenannten Ansprüche, **dadurch gekennzeichnet, dass** der Saugnapf (1) ein Anschluss- oder Griffelement (7) oder der Vakuumgreifer (1V) einen Anschluss für eine Vakuumpumpe aufweist, über den ein Vakuum zwischen Saugnapf (1) oder Vakuumgreifer (1V) und der Substratoberfläche (2) herstellbar ist.

15. Saugvorrichtung nach einem oder mehreren der vorgenannten Ansprüche, **dadurch gekennzeichnet, dass** bei einer Saugvorrichtung in Form eines Vakuumgreifers (1V) oder Saughebers der erste Bereich (3) aus einem sehr harten Material ausgebildet ist.

## Claims

1. A suction device, in particular a suction cup (1), suction lifter, or vacuum gripper (1V), for reversible attachment to a substrate surface (2), comprising a first component (3), which is used for an actuation of the suction device, and a second component (4), which can be brought into contact with the substrate surface (2) via the suction cup surface (5), wherein the first component (3) is made of at least one harder first material and the second component (4) of at least one, in comparison to the first material, softer second material, wherein the second material is a material with a Shore 00 hardness less than 50, so that the second component (4) adapts the better to rough, uneven and/or curved substrate surfaces (2) the softer and thicker the second material is, **characterized in that** the said thickness (d2) of the second component (4) measures, in an unloaded condition, at least 2.5 % of an outer diameter (D1) or a length (L) or a width (B) of the first component (3), and that the second component (4) is not restricted in its radial freedom of movement neither by internal nor by external stops of the first component (3).

2. A suction device, in particular a suction cup (1), suction lifter, or vacuum gripper (1V), for reversible attachment to a substrate surface (2), comprising a first component (3), which is used for an actuation of the suction device, and a second component (4), which can be brought into contact with the substrate surface (2) via the suction cup surface (5), wherein the first component (3) is made of at least one harder first material and the second component (4) of at least one, in comparison to the first material, softer second material, and wherein the second material is an ultra-soft material with a Shore 00 hardness less than 50; and wherein the second material, which is softer than the first one, contains particles (6) and/or fibers and/or columns or column-like structures integrated in it; which are harder than the second material and, which, at a force acting onto the suction cup surface in the direction of the substrate surface, are pressed toward the substrate surface, and onto a curved contour of the substrate surface and/or can be at least partially pressed in recesses of a roughness profile of the substrate surface.

3. The suction device according to claim 1 or 2, wherein the said material of the second component (4) has a Shore 00 hardness less than or equal to 35.

4. The suction device according to one or more of the previous claims, wherein the said second component (4) extends inward from a circumferential margin over at least 55% of a total area of the first component (3) and toward the substrate surface (2).

5. The suction device according to one or more of the previous claims, wherein the said second component (4) extends over at least 65% of a the total suction cup area of the first component (3).

6. The suction device according to one or more of the previous claims, wherein the said second component (4) extends over at least 75% of the total suction cup area of the first component (3).

7. The suction device according to one or more of the previous claims, wherein the said material of the second component (4) has a thickness of 3% to 8% of an outer diameter (D1) or a length (L) or a width (B) of the first component (3).

8. The suction device according to one or more of the previous claims, wherein the said material of the second component (4) has a thickness of 3.5% to 7% of an outer diameter (D1) or a length (L) or a width (B) of the first component (3).

9. The suction device according to one or more of the previous claims, wherein the first component (3) has an outer diameter (D1), and the second component (4) has a comparably larger outer diameter (D2).

10. The suction device according to one or more of the previous claims, wherein at least one second material of the second component (4) consists of at least one polymer and/or at least one elastomer or a combination of one or more polymers and/or elastomers.

11. The suction device according to one or more of the previous claims, wherein columns with an round or polygonal cross-section are embedded in the second component (4) and consist of an elastic material, which is harder than said material of the second component (4).

12. The suction device according to one or more of the previous claims, wherein projections and/or a structure protrude out of the first component (3), reach into the second component (4) and, while a contact pressure is exerted, can be pressed into the second component (4) and the substrate surface (2).

13. The suction device according to one or more of the previous claims, wherein at least one second material of the second component (4) is a swellable material and/or the second material contains swellable particles and/or the second component (4) is coated with a swellable material on the suction cup surface (5).

14. The suction device according to one or more of the previous claims, wherein the suction cup (1) contains a grip or connection element (7) or the vacuum gripper (1V) contains a connection for the vacuum pump, whereby a vacuum between the suction cup (1) or the vacuum gripper (1V) and the substrate surface (2) can be generated.

15. The suction device according to one or more of the previous claims, wherein the first component (3) of a suction device in the form of a vacuum gripper (1V) or a suction lifter is made of a very hard material.

## Revendications

1. Dispositif d'aspiration, notamment la ventouse (1), le siphon ou préhenseur à vide (1V), pour une adhésion réversible au niveau de la surface du substrat (2), présentant une première zone (3) qui sert à l'actionnement du dispositif d'aspiration, et une deuxième zone (4) qui peut être mise en contact avec la surface du substrat (2) par l'intermédiaire d'une surface de ventouse (5), la première zone (3) étant constituée d'au moins un premier matériau plus dur et la deuxième zone (4),, d'un deuxième matériau plus mou par rapport au premier matériau, le deuxième matériau étant un matériau d'une dureté Shore 00 inférieure à 50, de sorte que la deuxième zone (4) s'aspire d'autant mieux sur des surfaces de substrat (2) rugueuses, inégales et/ou incurvées que le deuxième matériau est souple et épais, **caractérisé en ce que** l'épaisseur (d2) de la deuxième zone (4) dans un état non chargé s'élève à au moins 2,5 % d'un diamètre extérieur (D1), d'une longueur (L) ou d'une largeur (B) de la première zone (3) et **en ce que** la deuxième zone (4) n'est pas limitée dans sa liberté de mouvement radial par des butées internes ou externes de la première zone (3).

2. Dispositif d'aspiration, notamment la ventouse (1), le siphon ou préhenseur à vide (1V), pour une adhésion réversible au niveau de la surface du substrat (2), présentant une première zone (3) qui sert à l'actionnement du dispositif d'aspiration, et une deuxième zone (4) qui peut être mise en contact avec la surface du substrat (2) par l'intermédiaire d'une surface de ventouse (5), la première zone (3) étant constituée d'au moins un premier matériau plus dur et la deuxième zone (4),, d'un deuxième matériau plus mou par rapport au premier matériau, le deuxième matériau étant un matériau ultra-souple avec une dureté Shore 00 inférieure à 50, dans lequel des particules (6) et/ou des fibres et/ou des colonnes ou des structures sous forme de colonne qui sont plus dures que le deuxième matériau sont intégrées dans le deuxième matériau plus mou par rapport au premier matériau et qui, lors d'une force agissant sur la surface de la ventouse en direction de la surface du substrat, sont pressées en direction de la surface du substrat et s'appuient sur un contour incurvé de la surface du substrat et/ou peuvent être pressées au moins partiellement dans des évidements d'un profil de rugosité de la surface du substrat.

3. Dispositif d'aspiration conformément à la revendication 1 ou 2, **caractérisé en ce que** le matériau de la deuxième zone (4) fait preuve d'une dureté égale / inférieure à Shore 0035.

4. Dispositif d'aspiration conformément à l'une ou plusieurs des revendications susmentionnées, **caractérisé en ce que** la deuxième zone (4) est bâtie à partir d'un bord périphérique de la première zone (3) sur plus de 55 % minimum d'une surface en direction de la surface de substrat (2) de l'ensemble de la première zone (3).

5. Dispositif d'aspiration conformément à l'une ou plusieurs des revendications susmentionnées, **caractérisé en ce que** la deuxième zone (4) est bâtie sur plus de 65 % minimum de l'ensemble de la surface de la zone de ventouse de la première zone (3).

6. Dispositif d'aspiration conformément à l'une ou plusieurs des revendications susmentionnées, **caractérisé en ce que** la deuxième zone (4) est bâtie sur plus de 75 % minimum de l'ensemble de la surface de la zone de ventouse de la première zone (3).

7. Dispositif d'aspiration conformément à l'une ou plusieurs des revendications susmentionnées, **caractérisé en ce que** le matériau de la deuxième zone (4) possède une épaisseur allant de 3 % à 8 % d'un diamètre extérieur (D1) ou une longueur (L) ou largeur (I) de la première zone (3).

8. Dispositif d'aspiration conformément à l'une ou plusieurs des revendications susmentionnées, **caractérisé en ce que** le matériau de la deuxième zone (4) possède une épaisseur allant de 3,5 % à 7 % d'un diamètre extérieur (D1) ou une longueur (L) ou largeur (I) de la première zone (3).

9. Dispositif d'aspiration conformément à l'une ou plusieurs des revendications susmentionnées, **caractérisé en ce que** la première zone (3) possède un diamètre extérieur (D1) et la deuxième zone (4) un diamètre extérieur plus important comparé au précédent (D2).

10. Dispositif d'aspiration conformément à l'une ou plusieurs des revendications susmentionnées, **caractérisé en ce qu'**au moins un deuxième matériau de la deuxième zone (4) est composé d'au moins un polymère et/ou au moins un élastomère ou d'une combinaison d'un de chaque ou de plusieurs polymères et/ou élastomères.

11. Dispositif d'aspiration conformément à l'une ou plusieurs des revendications susmentionnées, **caractérisé en ce que** l'intérieur de la deuxième zone (4) est constitué de piliers composés d'un matériau élastique plus dur que le matériau de la deuxième zone (4) et présentant une coupe transversale arrondie ou rectangulaire.

12. Dispositif d'aspiration conformément à l'une ou plusieurs des revendications susmentionnées, **caractérisé en ce que** des hauteurs et/ou une structure est(sont) construite(s) dans la première zone (3). Ces hauteurs entrent en contact avec la deuxième zone (4) et, en exerçant une pression dans la deuxième couche (4) et la surface de substrat (2), sont comprimables.

13. Dispositif d'aspiration conformément à l'une ou plusieurs des revendications susmentionnées, **caractérisé en ce qu'**au moins un deuxième matériau de la deuxième zone (4) est recouvert d'un matériau gonflable et/ou que le deuxième matériau contient des particules gonflables et/ou la deuxième zone (4) est revêtue d'un matériau gonflable sur la surface de la ventouse (5).

14. Dispositif d'aspiration conformément à l'une ou plusieurs des revendications susmentionnées, **caractérisé en ce que** la ventouse (1) un élément de raccord ou de prise (7) ou le préhenseur à vide (1V) présente un raccordement pour une pompe à vide, par l'intermédiaire duquel un vide peut être établi entre la ventouse (1) ou le préhenseur à vide (1V) et la surface du substrat (2).

15. Dispositif d'aspiration conformément à l'une ou plusieurs des revendications susmentionnées, **caractérisé en ce que**, dans le cas d'un dispositif d'aspiration sous forme de préhenseur à vide (1V) ou de ventouse, la première zone (3) est réalisée dans un matériau très dur.
